# FASCICULE DE BREVET EUROPEEN

(11) **EP 1 564 064 B1**
(45) Date de publication et mention de la délivrance du brevet: **03.08.2016**
(21) Numéro de dépôt: 05290282.2
(22) Date de dépôt: 09.02.2005
(51) Int. Cl.: H01H 9/00, B60L 9/00, H01H 31/30, H01H 9/14

(54) **DISPOSITIF MULTIFONCTION POUR SYSTÈME FERROVIAIRE DE CAPTAGE DE COURANT**
MULTIFUNKTIONSVORRICHTUNG ZUR STROMABNAHME IN EINEM SCHIENENSYSTEM
MULTIFUNCTIONAL DEVICE FOR COLLECTING CURRENT IN A RAILWAY SYSTEM

(30) Priorité: 10.02.2004 FR 0401259
(43) Date de publication de la demande: 17.08.2005
(73) Titulaire: Faiveley Transport, 92230 Gennevilliers (FR)
(72) Inventeur: Cisse, Olivier, 37300 Joue les Tours (FR)
(74) Mandataire: Regimbeau

(56) Documents cités:
- EP-A- 0 743 528
- PATENT ABSTRACTS OF JAPAN vol. 1997, no. 11, 28 novembre 1997 (1997-11-28) & JP 09 200905 A (HITACHI LTD; EAST JAPAN RAILWAY CO), 31 juillet 1997 (1997-07-31)
- PATENT ABSTRACTS OF JAPAN vol. 1998, no. 02, 30 janvier 1998 (1998-01-30) & JP 09 261803 A (TOSHIBA TRANSPORT ENG KK; TOSHIBA CORP), 3 octobre 1997 (1997-10-03)

## Description

L'invention concerne un dispositif destiné à être utilisé dans les systèmes de captage de courant pour matériel roulant ferroviaire, et en particulier les systèmes de captage de courant pour des locomotives, des autorails et des motrices ferroviaires à circuit de traction multi-tension.

D'une manière générale, les matériels roulant ferroviaires à circuit de traction multi-tension peuvent être alimentés par du courant continu ou alternativement par du courant monophasé.

Un circuit de traction multi-tension peut ainsi être alimenté à partir de courants électriques captés sur une ligne caténaire à courant continu (dont la tension est par exemple de 1500 Volt ou de 3000 Volt) ou alternativement à partir de courants électriques captés sur une ligne caténaire à courant monophasé (dont la tension est par exemple de 15000 Volt à 16 2/3 Hertz ou encore de 25000 Volt à 50 Hertz).

La captation du courant sur la ligne caténaire est assurée par un appareil dit pantographe comprenant une structure articulée fixée sur le toit d'une rame ferroviaire, le courant ainsi capté étant véhiculé par une ligne d'alimentation électrique dite ligne de toiture.

Un pantographe continu (PTC) est ainsi utilisé pour capter le courant d'une ligne caténaire à courant continu.

Alternativement, un pantographe monophasé (PTM) est utilisé pour capter le courant d'une ligne caténaire à courant monophasé.

Dans le cadre des matériels ferroviaires à circuit de traction multi-tension, la ligne de toiture disposée en toiture du matériel roulant comporte, d'une manière générale, un pantographe continu PTC et un pantographe monophasé PTM, de manière à ce que ledit circuit de traction puisse être alimenté quelque soit le type de courant, continu ou monophasé, véhiculé par la ligne caténaire.

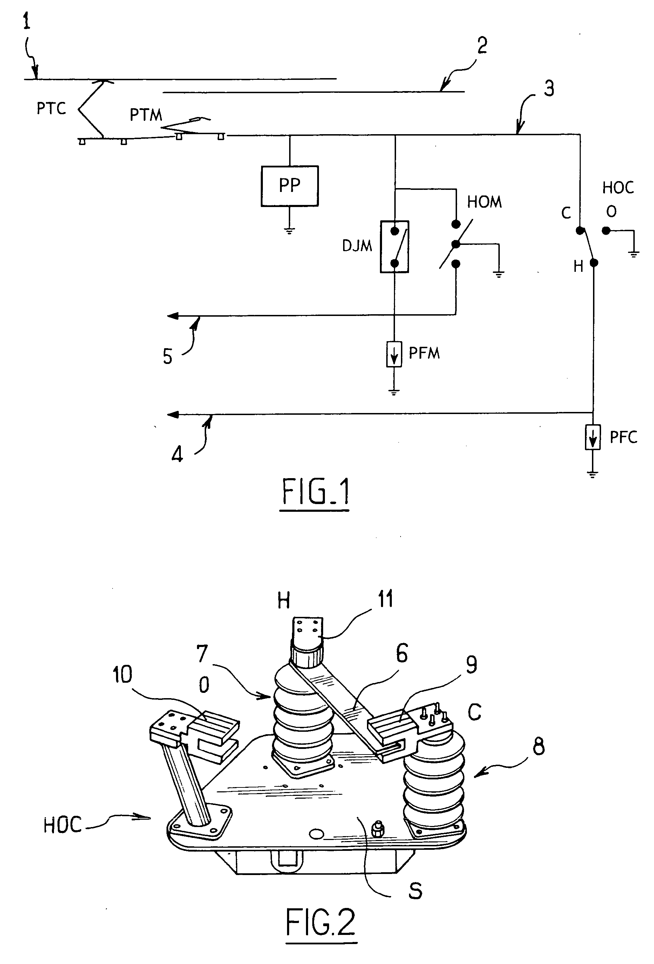

La figure 1 est un schéma d'un système de captage de courant classiquement utilisé pour alimenter un circuit de traction multi-tension d'un matériel roulant ferroviaire.

Sur cette figure, les références 1 et 2 représentent respectivement un ligne caténaire à courant continu et une ligne caténaire à courant monophasé.

Dans l'exemple retenu sur la figure 1, la ligne caténaire sous laquelle le matériel roulant circule est la ligne caténaire 1 à courant continu.

Un pantographe continu PTC est ainsi déplié pour venir au contact de ladite ligne caténaire 1.

Un pantographe monophasé PTM est quant à lui replié de manière à ne pas contacter ladite ligne caténaire 1 à courant continu.

Une ligne de toiture 3, à laquelle les pantographes continu PTC et monophasé PTM sont reliés, véhicule dans ce cas du courant continu capté par le pantographe continu PTC sur la ligne caténaire 1 à courant continu.

Alternativement, lorsque la ligne caténaire sous laquelle le matériel roulant circule est la ligne caténaire 2 à courant monophasé, le pantographe continu PTC est replié, le pantographe monophasé PTM est déplié pour venir au contact de la ligne caténaire 2 et la ligne de toiture 3 véhicule alors du courant monophasé.

Les références 4 et 5 de la figure 1 représentent respectivement une ligne de puissance continue prévue pour acheminer du courant continu au circuit de traction multi-tension (non représenté) du matériel roulant et une ligne de puissance monophasée prévue pour acheminer du courant monophasé audit circuit de traction du matériel roulant.

Un système de captage de courant comporte classiquement différents équipements électrotechniques disposés en toiture du matériel roulant. Ces équipements sont mentionnés ci-après.

Un commutateur « continu/terre » HOC est disposé entre la ligne de toiture 3 et la ligne 4 de puissance continue.

Le commutateur HOC est adapté pour pouvoir basculer, selon que la ligne 3 de toiture véhicule du courant continu ou du courant monophasé, entre un premier état selon lequel il relie la ligne 3 de toiture à la ligne 4 de puissance continue, et un second état selon lequel il met ladite ligne 4 de puissance continue à la terre.

Un tel commutateur HOC sera décrit plus en détail par la suite.

Un commutateur « monophasé/terre » HOM, agencé en parallèle d'un disjoncteur monophasé DJM, est disposé entre la ligne de toiture 3 et la ligne 5 de puissance monophasée.

Des moyens PFC de protection contre la foudre et les chocs de manoeuvre sont reliés à la ligne 4 de puissance continue.

De manière similaire, des moyens PFM de protection contre la foudre et les chocs de manoeuvre sont reliés à la ligne 5 de puissance monophasée.

Enfin, le système classique de captage de courant illustré sur la figure 1 comporte également des moyens palpeur de tension PP pour la reconnaissance de la tension véhiculée par la ligne de toiture 3.

D'une manière classique en soi, on retrouve, en autres, en toiture d'un matériel roulant ferroviaire, les équipements électrotechniques mentionnés ci-dessus (PP, HOC, HOM, DJM, PFM, PFC) dans le cadre de la description de la figure 1.

Comme cela a été mentionné, chacun de ces équipements assure une fonctionnalité unique et est réalisé indépendamment des autres.

Du fait cette multiplicité d'équipements à intégrer, un système classique de captage du courant est en particulier coûteux, encombrant et lourd.

Par ailleurs, de nombreuses liaisons électriques de puissance doivent être réalisées entre les différents équipements électrotechniques, ce qui complique le câblage électrique d'un tel système classique de captage de courant.

Le document JP 09 200905 A décrit un dispositif pour matériel roulant ferroviaire comportant des moyens de commutation.

L'invention a pour objectif de pallier aux inconvénients des systèmes de captage de courant pour matériel roulant ferroviaire mis en évidence ci-dessus.

A cet effet, l'invention propose, selon un premier aspect, un dispositif destiné à être utilisé dans un système de captage de courant pour matériel roulant ferroviaire à circuit de traction multi-tension comprenant une ligne de toiture véhiculant le courant capté depuis une ligne caténaire, caractérisé en ce qu'il comporte de façon intégrée sur un même support mécanique :
▪ des moyens de commutation aptes à réaliser une commutation, selon que la ligne de toiture véhicule du courant continu ou du courant monophasé, entre :
   - un premier état selon lequel il relie ladite ligne de toiture à une ligne de puissance continue prévue pour acheminer du courant continu vers le circuit de traction dudit matériel,
   - et un second état selon lequel il isole ladite ligne de toiture et met ladite ligne de puissance continue à la terre ou sur une autre ligne de puissance continue ;
▪ ainsi que des moyens palpeur de tension pour la reconnaissance de la tension véhiculée par la ligne de toiture, et/ou des moyens de protection électrique contre la foudre et les chocs de manoeuvre.

Selon un autre aspect, l'invention propose un système de captage de courant pour matériel roulant ferroviaire à circuit de traction multi-tension caractérisé en ce qu'il comporte un dispositif selon le premier aspect de l'invention.

D'autres caractéristiques, buts et avantages de l'invention apparaîtront à la lecture de la description détaillée qui va suivre, et au regard des dessins annexés, donnés à titre d'exemples non limitatifs et sur lesquels :
- la figure 1, déjà commentée, représente le schéma d'un système classique de captage de courant pour matériel ferroviaire ;
- la figure 2 représente un commutateur « continu/terre » HOC du type de ceux utilisés dans un système classique de captage de courant pour matériel ferroviaire ;
- les figures 3, 4, 5 et 6 représentent un dispositif selon un mode de réalisation possible du premier aspect de l'invention, respectivement selon une vue en perspective de dessous, une vue en perspective de dessus, une vue de dessus et une vue de dessous ;
- les figures 7, 8, 9 et 10 représentent un dispositif selon un autre mode de réalisation possible du premier aspect de l'invention, respectivement selon une vue en perspective de dessous, une vue en perspective de dessus, une vue de dessus et une vue de dessous ;
- la figure 11 est une vue en perspective d'une toiture de matériel roulant ferroviaire sur laquelle est disposé un dispositif selon un mode de réalisation possible du premier aspect de l'invention.

On rappelle ci-après succinctement, au regard des figures 1 et 2, le fonctionnement d'un commutateur HOC classiquement utilisé dans un système de captage de courant.

Le commutateur HOC comporte une plaque support S ainsi que trois pôles (à savoir un pôle H, un pôle O et un pôle C) s'étendant chacun depuis une même face de ladite plaque support S.

Ledit commutateur comporte également un bras mobile 6 de commutation.

Comme cela apparaît sur la figure 1, le pôle H est destiné à être relié à la ligne 4 de puissance continue, le pôle O est destiné à être relié à la terre et le pôle C est destiné à être relié à la ligne 3 de toiture.

Le pôle H comporte un isolateur 7 (par exemple un isolateur 25 000 Volt) sur lequel sont agencés des moyens 11 adaptés pour porter une extrémité du bras mobile 6 en autorisant le pivotement dudit bras mobile 6 autour du pôle H.

L'extrémité du bras mobile 6 qui n'est pas portée par le pôle H est libre.

Le pôle C comporte un isolateur 8 (par exemple un isolateur 25 000 Volt) sur lequel est agencé une première mâchoire 9 apte à recevoir l'extrémité libre du bras mobile 6.

Le pôle O comporte une seconde mâchoire 10 reliée directement à la terre et apte à recevoir l'extrémité libre du bras mobile 6.

Le bras mobile 6 peut ainsi pivoter entre une première position selon laquelle son extrémité libre est reçue par la mâchoire 9 du pôle C et une seconde position selon laquelle son extrémité libre est reçue par la mâchoire 10 du pôle O, et réciproquement.

Lorsque l'extrémité libre du bras mobile est reçue par ladite première mâchoire 9 du pôle C, la liaison électrique entre les pôles H et C est établie, et par conséquent la liaison électrique entre la ligne 3 de toiture et la ligne 4 de puissance continue est également établie.

Lorsque l'extrémité libre du bras mobile est reçue par ladite seconde mâchoire 10 du pôle O, la liaison électrique entre les pôle H et O est établie, et par conséquent la ligne 4 de puissance continue est mise à la terre.

Par pivotement du bras mobile, le commutateur HOC est ainsi apte à commuter entre un premier état selon lequel il relie la ligne 3 de toiture à la ligne 4 de puissance continue (liaison H-C), et un second état selon lequel il met ladite ligne 4 de puissance continue à la terre (liaison H-O).

On mentionne ici qu'un autre type de commutateur (commutateur HMC) peut également être utilisé dans un système classique du type de celui illustré sur la figure 1, en lieu et place du commutateur HOC.

Le commutateur HMC est similaire au commutateur HOC, sauf en ce qu'il comporte, en lieu et place du pôle O du commutateur HOC, un pôle M comportant un isolateur pour une utilisation en inverseur.

Un commutateur HMC est ainsi apte à commuter entre un premier état selon lequel il relie la ligne de toiture à la ligne de puissance continue en réalisant la liaison H-C et un second état selon lequel il met la ligne de puissance continue en liaison avec une autre ligne de puissance continue interne au matériel ferroviaire.

Ladite autre ligne de puissance continue comporte de manière générale un transformateur et un redresseur prévus pour transformer du courant monophasé, véhiculé par la ligne de toiture et capté sur la ligne caténaire, en un courant continu.

Le pivotement du bras mobile, et par conséquent la commutation, d'un commutateur HOC ou HMC sont classiquement assurés à l'aide de vérins pneumatiques.

On note ici qu'une telle commande pneumatique de la commutation d'un commutateur HOC ou HMC est particulièrement encombrante.

La manoeuvre manuelle du pivotement du bras mobile est en outre impossible.

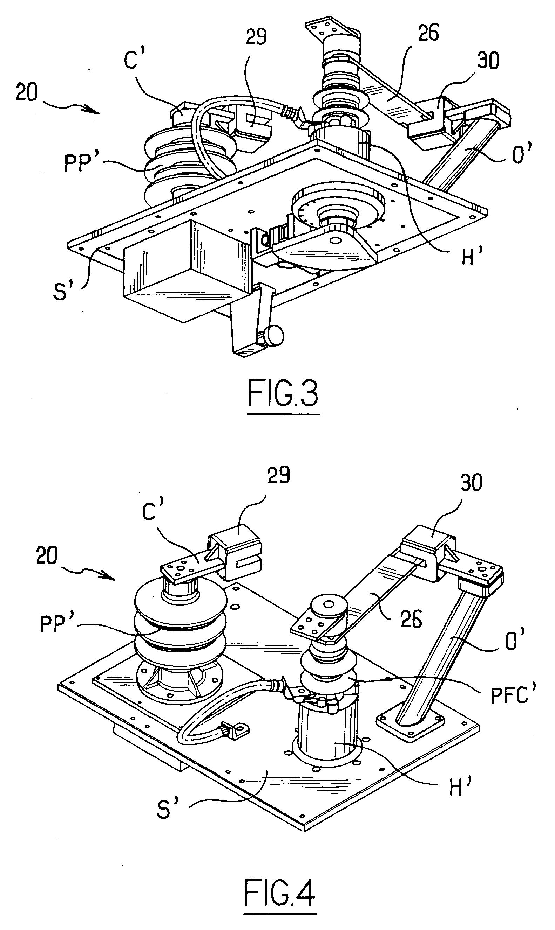

En référence aux figures 3, 4, 5 et 6, on décrit ci-après différents modes de réalisation possible d'un dispositif selon le premier aspect de l'invention.

Ce dispositif 20 est destiné à être utilisé dans un système de captage de courant pour matériel roulant ferroviaire à circuit de traction multi-tension.

Ledit système de captage comprend une ligne de toiture véhiculant le courant capté depuis une ligne caténaire par un ou plusieurs pantographes.

Le dispositif 20 comporte des moyens de commutation qui d'une manière générale sont aptes à assurer la fonction de commutation d'un commutateur de type HOC précédemment évoqué.

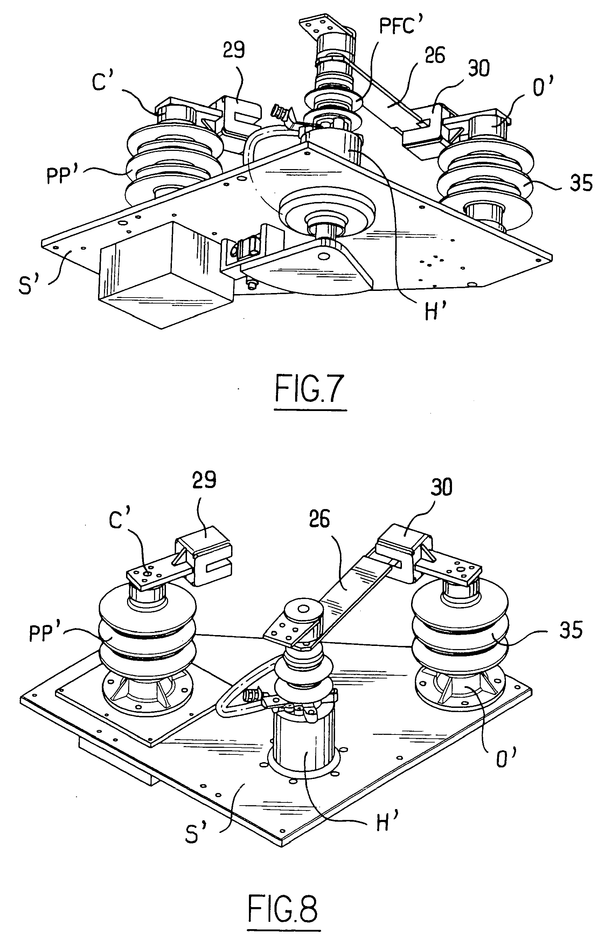

Les figures 7, 8, 9 et 10 sont destinées à illustrer différents modes de réalisation possible d'un autre dispositif selon le premier aspect de l'invention comportant quant à lui des moyens de commutation qui d'une manière générale sont aptes à assurer la fonction de commutation d'un commutateur de type HMC précédemment évoqué.

On prend plus précisément par la suite l'exemple, illustré par les figures 3 à 6, d'une commutation de type HOC.

Le dispositif 20 comporte une plaque support S' portant trois pôles qui peuvent par exemple s'étendrent chacun depuis une même face de ladite plaque support S'.

L'agencement des pôles n'est cependant pas limité à celui représenté sur les figures selon lequel il s'étendent chacun depuis une même face de ladite plaque support S'. A titre d'exemple, la plaque support peut effectivement être surélevée et lesdits pôles peuvent s'étendrent d'un côté ou de l'autre de celle-ci.

Lesdits pôles sont les suivants :
- un pôle H' destiné à être relié à une ligne de puissance continue prévue pour acheminer du courant continu vers le circuit de traction du matériel roulant,
- un pôle O' destiné à être relié à la terre,
- et un pôle C' destiné à être relié à la ligne de toiture.

Bien entendu, lorsqu'il s'agit d'assurer la fonctionnalité d'un commutateur HMC, le pôle O' est un pôle destiné à être relié à une autre ligne de puissance continue, interne au matériel ferroviaire et du type précédemment décrit. Ledit pôle O' comporte ainsi un isolateur (isolateur 35 sur les figures 7, 8 et 9) pour une utilisation en inverseur.

Le dispositif 20 comporte un bras mobile 26 qui, de manière similaire à ce qui a été présenté précédemment pour le commutateur HOC, a l'une de ses extrémités portée par le pôle H', de manière adaptée pour que ledit bras mobile 26 puisse pivoter autour dudit pôle H'.

L'extrémité du bras mobile 26 qui n'est pas portée par le pôle H' est libre.

Le pôle C' comporte une première mâchoire 29 apte à recevoir l'extrémité libre du bras mobile 26.

Le pôle O' comporte une seconde mâchoire 30 reliée directement à la terre et apte à recevoir l'extrémité libre du bras mobile 26.

Le bras mobile 26 peut ainsi pivoter entre une première position selon laquelle son extrémité libre est reçue par la mâchoire 29 du pôle C' et une seconde position selon laquelle son extrémité libre est reçue par la mâchoire 30 du pôle O', et réciproquement.

Lorsque l'extrémité libre du bras mobile est reçue par ladite première mâchoire 29 du pôle C', la liaison électrique entre les pôles H' et C' est établie, et par conséquent la liaison électrique entre la ligne 3 de toiture et la ligne 4 de puissance continue peut également être établie.

Lorsque l'extrémité libre du bras mobile est reçue par ladite seconde mâchoire 30 du pôle O', la liaison électrique entre les pôle H' et O' est établie, et par conséquent la ligne 4 de puissance continue peut être mise à la terre (respectivement sur une autre ligne de puissance continue).

Par pivotement du bras mobile 26, le dispositif 20 peut ainsi assurer la fonction de commutation d'un commutateur HOC (respectivement HMC).

Selon un premier mode de réalisation possible de l'invention, le pôle H' du dispositif 20 ne comporte pas d'isolateur, au contraire du pôle H d'un commutateur HOC classique tel qu'illustré sur la figure 2 (qui comporte un isolateur 7).

Selon ce premier mode de réalisation possible de l'invention, des moyens de protection PFC' contre la foudre et les chocs de manoeuvre sont agencés au niveau dudit pôle H' en lieu et place de l'isolateur 7 du pôle H d'un commutateur HOC classique.

Lesdits moyens de protection PFC' remplissent une fonction similaire à celle des moyens de protection PFC classiquement reliés à la ligne de puissance continue (cf. figure 1).

De telle sorte, sont intégrées au dispositif selon le premier mode de réalisation possible de l'invention, à la fois la fonction de commutation de type HOC ou HMC et la fonction de protection électrique contre la foudre et les chocs de manoeuvre.

Lorsqu'un tel dispositif est disposé dans un système de captage de courant, on comprend qu'il n'est pas nécessaire de prévoir un dispositif distinct (du type des moyens de protection PFC illustrés sur la figure 1) pour assurer la fonction de protection électrique.

On notera que l'intégration desdits moyens PFC' de protection au pôle H' du dispositif est en particulier rendue possible du fait de l'évolution de la technologie des parafoudres.

Il est effectivement désormais possible de réaliser un parafoudre 3 kV (notamment à l'aide de disques d'oxydes métalliques) dont le volume est celui d'un isolateur classique (en particulier un isolateur 25 kV).

Selon un deuxième mode de réalisation possible de l'invention, des moyens palpeur de tension PP' aptes à reconnaître la tension véhiculée par la ligne de toiture sont agencés au niveau dudit pôle C', en lieu et place de l'isolateur 8 du pôle C d'un commutateur HOC classique (tel qu'illustré sur la figure 2).

Lesdits moyens palpeur de tension PP' remplissent une fonction similaire à celle du palpeur de tension PP classiquement relié à la ligne de toiture (cf. figure 1).

Lesdits moyens palpeur de tension PP' permettent en outre d'isoler le pôle C' de la masse.

De telle sorte, sont intégrées au dispositif selon ce deuxième mode de réalisation possible de l'invention, à la fois la fonction de commutation de type HOC ou HMC et la fonction de reconnaissance de la tension véhiculée par la ligne de toiture

Lorsqu'un tel dispositif 20 est disposé dans un système de captage de courant, on comprend qu'il n'est pas nécessaire de prévoir un dispositif distinct (du type des moyens palpeur de tension PP illustrés sur la figure 1) pour assurer la fonction de protection électrique.

On notera que l'intégration desdits moyens PP' palpeur de tension au pôle C' du dispositif 20 est en particulier rendue possible du fait de l'évolution de la technologie du palpage de tension.

Il est aujourd'hui possible en utilisant un pont diviseur de résistances haute tension à la place d'un transformateur de tension 25 kV classique de disposer d'un palpeur de tension compact.

La taille d'un tel palpeur de tension est ainsi comparable à celle d'un isolateur 25kV utilisé en pied (support isolateur) de pantographe.

On trouvera un exemple d'un tel palpeur de tension compact dans la demande de brevet EP 0 743 528.

Par ailleurs, lorsque de tels moyens PP' palpeur de tension sont agencés au pôle C', on peut avantageusement installer ledit pôle C' en pôle isolateur de l'un des pantographes PTC (pantographe continu) ou PTM (pantographe monophasé). L'isolateur desdits moyens PP' palpeur de tension doit à cet effet être dimensionné afin qu'il résiste aux efforts mécaniques tels que vus par un pied 25 kV de pantographe.

Selon un autre mode de réalisation particulièrement avantageux de l'invention, le dispositif selon le premier aspect de l'invention incorpore, comme cela est représenté sur les figures 3 à 10, en sus des moyens de commutation, à la fois des moyens PFC' de protection électrique et des moyens PP' palpeur de tension, par combinaison des premier et deuxième mode de réalisation exposés ci-dessus.

On comprend de ce qui précède que le dispositif selon le premier aspect de l'invention peut comporter de manière intégrée sur un même support mécanique deux fonctionnalités différentes (moyens de commutation type HOC/HMC et moyens de protection électrique, ou moyens de commutation type HOC/HMC et moyens palpeur de tension), ou encore trois fonctionnalité différentes (moyens de commutation type HOC/HMC et moyens de protection électrique et moyens palpeur de tension), et jusqu'à quatre fonctionnalités différentes (en ajoutant celle de pied isolateur de pantographe) parmi les fonctionnalités devant être assurées par un système de captage de courant pour matériel ferroviaire.

Lorsque le dispositif intègre lesdites quatre fonctionnalités, il ne dispose alors que de deux interfaces mécaniques (toiture, pantographe) et de trois connexions de puissance électrique.

On a vu précédemment que le bras mobile d'un commutateur HOC/HMC classique est manoeuvré en rotation à l'aide d'un système à vérins pneumatiques.

Le dispositif selon le premier aspect de l'invention peut disposer de moyens de pilotage du pivotement du bras mobile sous forme d'une motorisation électrique ou pneumatique.

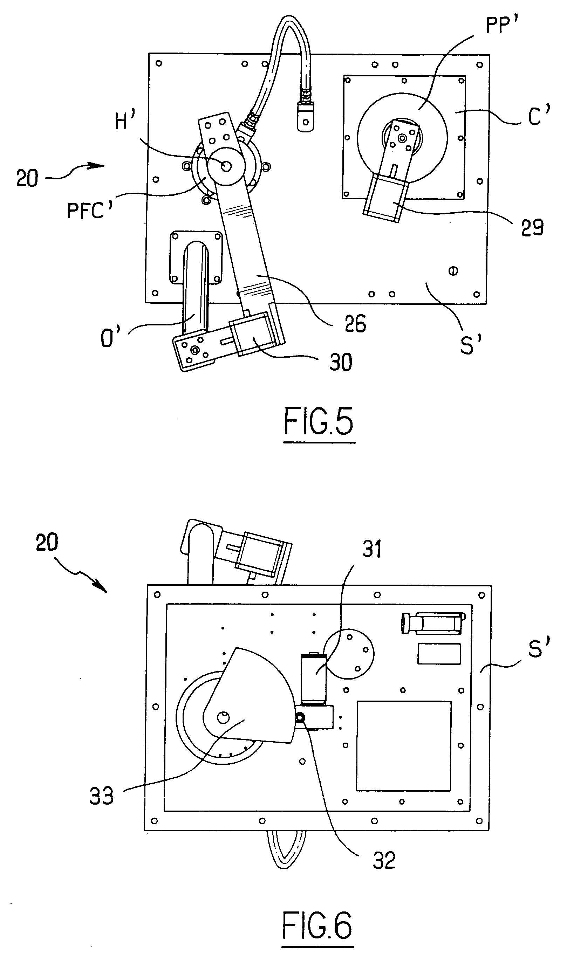

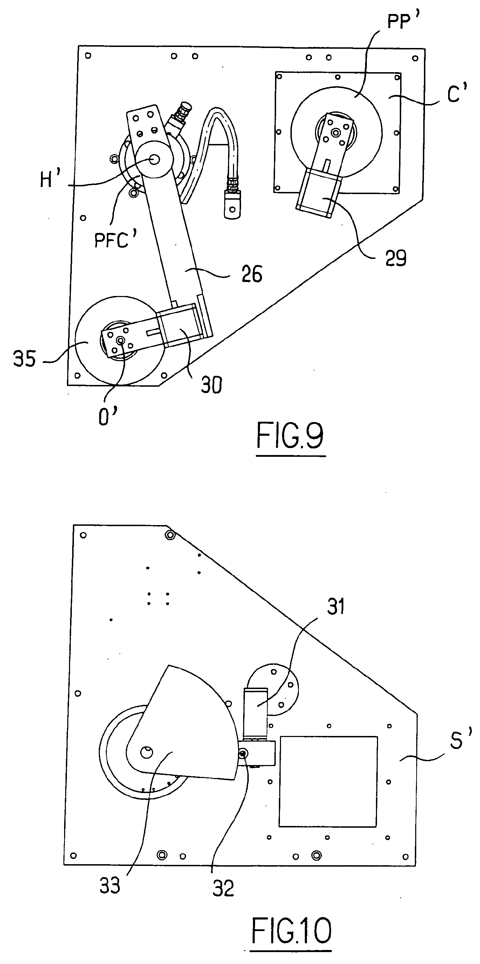

En référence aux vues de dessous des figures 6 et 10, et selon un mode de réalisation possible de l'invention, un motoréducteur 31 est disposé du côté de la plaque support S' opposé à celui depuis lequel s'étendent les pôles.

Ledit motoréducteur entraîne en rotation un engrenage droit 32. Le pôle H' du dispositif 20 est lié solidairement à une pièce 33 disposant d'un secteur denté apte à coopérer avec ledit engrenage 32 de manière ce que le bras mobile soit entraîné en rotation.

Le bras mobile peut ainsi pivoter entre une première position selon laquelle son extrémité libre est reçue par la mâchoire 29 du pôle C' (assurant de fait la liaison H'-C') et une seconde position selon laquelle son extrémité libre est reçue par la mâchoire 30 du pôle O' (assurant de fait la liaison H'-0').

Avec une telle motorisation des moyens de pilotage du pivotement du bras mobile, on bénéficie d'un rapport de réduction tel qu'il est possible de manoeuvrer manuellement le bras mobile, en particulier à l'aide d'une clé de commande venant actionner des moyens adaptés prévus à cet effet sur l'engrenage 32 du moto-réducteur 31.

Bien évidemment, l'invention concerne également, selon un second aspect, un système de captage de courant pour matériel roulant ferroviaire incorporant un dispositif selon le premier aspect de l'invention.

L'utilisation d'un dispositif unique intégrant plusieurs fonctionnalités dans un système de captage de courant rend ledit système en particulier moins coûteux et moins encombrant que le système classiquement utilisé.

On notera par ailleurs que le câblage électrique est simplifié puisqu'un certain nombre de liaisons électriques de puissance ne sont plus nécessaires.

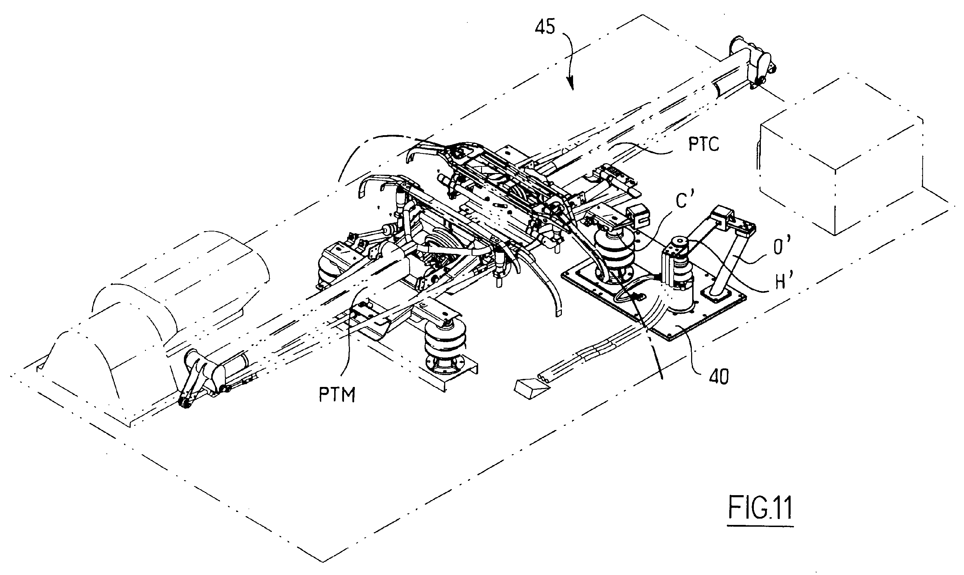

La figure 11 est une vue en perspective de dessus d'une toiture de matériel roulant ferroviaire pourvue d'un dispositif selon un mode de réalisation possible du premier aspect de l'invention.

Le dispositif 40 selon un mode de réalisation du premier aspect de l'invention représenté sur cette figure comporte plus précisément des moyens de commutation aptes à assurer la fonction de commutation d'un commutateur de type HOC.

Un pantographe continu PTC et un pantographe monophasé PTM sont installés sur la toiture 45 d'un matériel roulant ferroviaire.

On notera que, dans le cadre de cette figure 11, le pôle C' du dispositif 40 est installé en pied isolateur du pantographe continu PTC.

## Revendications

1. Dispositif destiné à être utilisé dans un système de captage de courant pour matériel roulant ferroviaire à circuit de traction multi-tension comprenant une ligne de toiture (3) véhiculant le courant capté depuis une ligne caténaire (1, 2), comportant de façon intégrée sur un support mécanique :
▪ des moyens de commutation aptes à réaliser une commutation, selon que la ligne de toiture véhicule du courant continu ou du courant monophasé, entre :
- un premier état selon lequel il relie ladite ligne de toiture (3) à une ligne (4) de puissance continue prévue pour acheminer du courant continu vers le circuit de traction dudit matériel,
- et un second état;
**caractérisé en ce que** selon le second état il isole ladite ligne de toiture (3) et met ladite ligne de puissance continue (4) à la terre ou sur une autre ligne de puissance continue ; et
**en ce qu'**il comporte de façon intégrée sur le même support mécanique :
- des moyens palpeur de tension (PP') pour la reconnaissance de la tension véhiculée par la ligne de toiture, et/ou
- des moyens de protection électrique (PFC') contre la foudre et les chocs de manoeuvre.

2. Dispositif selon la revendication précédente, **caractérisé en ce qu'**il comporte une plaque support (S') et **en ce que** lesdits moyens de commutation comprennent un pôle (H') destiné à être relié à la ligne de puissance continue, un pôle (C') destiné à être relié à la ligne de toiture, un pôle (O') destiné à être relié à la terre ou à ladite autre ligne de puissance continue, lesdits pôles (H', C', O') étant portés par ladite plaque support (S'), ainsi qu'un bras mobile (26) dont l'une des extrémités est portée par le pôle (H') destiné à être relié à la ligne de puissance continue et dont l'autre extrémité peut, par pivotement dudit bras autour du pôle (H') destiné à être relié à la ligne de puissance continue, venir au contact de l'un ou l'autre des autres pôles (C', O') pour venir relier la ligne de toiture à la ligne de puissance continue ou mettre la ligne de puissance continue à la terre ou sur ladite autre ligne de puissance continue.

3. Dispositif selon la revendication 2, caractérisé en ce lesdits pôles (H', C', O') s'étendent chacun depuis une même face de ladite plaque support (S').

4. Dispositif selon l'une des revendications 2 ou 3, **caractérisé en ce qu'**il comporte des moyens palpeur de tension (PP') et **en ce que** lesdits moyens palpeur de tension (PP') sont agencés au niveau dudit pôle (C') destiné à être relié à la ligne de toiture.

5. Dispositif selon l'une des revendications 2 ou 3, **caractérisé en ce qu'**il comporte desdits moyens de protection (PFC') et **en ce que** lesdits moyens de protection (PFC') sont agencés au niveau dudit pôle (H') destiné à être relié à la ligne de puissance continue.

6. Dispositif (20) selon l'une des revendications 2 ou 3, **caractérisé en ce qu'**il comporte à la fois des moyens palpeur de tension (PP') et des moyens de protection (PFC') et **en ce que** lesdits moyens palpeur de tension (PP ') sont agencés au niveau dudit pôle (C') destiné à être relié à la ligne de toiture et lesdits moyens de protection (PFC') sont agencés au niveau dudit pôle (H') destiné à être relié à la ligne de puissance continue.

7. Dispositif selon l'une des revendications 4 ou 6, **caractérisé en ce que** ledit pôle (C') destiné à être relié à la ligne de toiture est également destiné à être installé en pied ou support isolateur d'un pantographe permettant de capter, depuis la ligne caténaire, le courant qui est véhiculé sur la ligne de toiture.

8. Dispositif selon l'une des revendications 2 à 7, **caractérisé en ce qu'**il comporte des moyens de pilotage du pivotement du bras mobile (26) sous forme d'une motorisation électrique ou pneumatique.

9. Dispositif selon la revendication précédente, **caractérisé en ce que** le pôle (H') portant l'extrémité non libre du bras mobile (26) est lié solidairement à une pièce (33) disposant d'un secteur denté adapté pour coopérer avec un engrenage (32) apte à être entraîné en rotation par un moto-réducteur (31), de sorte que lesdits moyens de pilotage disposent d'un couple de réduction adapté pour permettre une commande manuelle du pivotement du bras mobile.

10. Dispositif selon la revendication précédente, **caractérisé en ce que** ledit engrenage (32) comportent des moyens adaptés pour permettre son actionnement au moyen d'une clé, de manière à permettre la commande manuelle du pivotement.

11. Système de captage de courant pour matériel roulant ferroviaire à circuit de traction multi-tension **caractérisé en ce qu'**il comporte un dispositif selon l'une des revendications précédentes.

## Patentansprüche

1. Vorrichtung, die zur Benutzung in einem Stromabnehmersystem für rollendes Eisenbahnmaterial mit Multispannungs-Stromkreis bestimmt ist, umfassend eine Dachleitung (3), welche den von einer Fahrleitung (1, 2) abgenommenen Strom befördert, aufweisend, auf einer mechanischen Stütze integriert:
▪ Kommutationsmittel, die imstande sind, eine Kommutation durchzuführen, je nachdem, ob die Dachleitung Gleichstrom oder Einphasenstrom befördert, zwischen:
- einem ersten Zustand, gemäß dem sie die Dachleitung (3) mit einer Gleichstromleitung (4) verbindet, die vorgesehen ist, Gleichstrom an den Stromkreis des Materials zu übertragen,
- und einem zweiten Zustand,
**dadurch gekennzeichnet, dass**, im zweiten Zustand, die Dachleitung (3) isoliert ist und die Gleichstromleitung (4) geerdet oder mit einer anderen Gleichstromleitung verbunden ist, und
▪ dass sie, auf derselben mechanischen Stütze integriert, aufweist:
- Spannungsfühlermittel (PP') für die Erkennung der von der Dachleitung beförderten Spannung, und/oder
- elektrische Schutzmittel (PFC') gegen Blitzschlag und Schaltstoßspannungen.

2. Vorrichtung nach vorangehendem Anspruch, **dadurch gekennzeichnet, dass** sie eine Stützplatte (S') aufweist und dass die Kommutationsmittel einen Pol (H') umfassen, der bestimmt ist, mit der Gleichstromleitung verbunden zu sein, einen Pol (C'), der bestimmt ist, mit der Dachleitung verbunden zu sein, einen Pol (0'), der bestimmt ist, mit der Erde oder mit der anderen Gleichstromleitung verbunden zu sein, wobei die Pole (H', C', O') von der Stützplatte (S') getragen werden, sowie einen mobilen Arm (26), von dem eines der Enden von dem Pol (H') getragen wird, der bestimmt ist, mit der Gleichstromleitung verbunden zu sein, und dessen anderes Ende durch Schwenken des Arms um den Pol (H'), der bestimmt ist, mit der Gleichstromleitung verbunden zu sein, mit dem einen oder dem anderen der anderen Pole (C', O') in Kontakt kommen kann, um die Dachleitung mit der Gleichstromleitung zu verbinden oder um die Gleichstromleitung zu erden oder mit der anderen Gleichstromleitung zu verbinden.

3. Vorrichtung nach Anspruch 2, **dadurch gekennzeichnet, dass** sich die Pole (H', C', 0') jeweils von einer selben Seite der Stützplatte (S') erstrecken.

4. Vorrichtung nach einem der Ansprüche 2 oder 3, **dadurch gekennzeichnet, dass** sie Spannungsfühlermittel (PP') aufweist und dass die Spannungsfühlermittel (PP') im Bereich des Pols (C') ausgebildet sind, der bestimmt ist, mit der Dachleitung verbunden zu sein.

5. Vorrichtung nach einem der Ansprüche 2 oder 3, **dadurch gekennzeichnet, dass** sie Schutzmittel (PFC') aufweist und dass die Schutzmittel (PFC') im Bereich des Pols (H') ausgebildet sind, der bestimmt ist, mit der Gleichstromleitung verbunden zu sein.

6. Vorrichtung (20) nach einem der Ansprüche 2 oder 3, **dadurch gekennzeichnet, dass** sie sowohl Spannungsfühlermittel (PP') als auch Schutzmittel (PFC') aufweist und dass die Spannungsfühlermittel (PP') im Bereich des Pols (C') ausgebildet sind, der bestimmt ist, mit der Dachleitung verbunden zu sein, und die Schutzmittel (PFC') im Bereich des Pols (H') ausgebildet sind, der bestimmt ist, mit der Gleichstromleitung verbunden zu sein.

7. Vorrichtung nach einem der Ansprüche 4 oder 6, **dadurch gekennzeichnet, dass** der Pol (C'), der bestimmt ist, mit der Dachleitung verbunden zu sein, ebenfalls bestimmt ist, als Isolationsfuß oder -stütze eines Stromabnehmers installiert zu sein, der erlaubt, ab der Fahrleitung den Strom abzunehmen, der über die Dachleitung befördert wird.

8. Vorrichtung nach einem der Ansprüche 2 bis 7, **dadurch gekennzeichnet, dass** sie Steuermittel des Schwenkens des beweglichen Arms (26) in Form einer elektrischen oder pneumatischen Motorisierung aufweist.

9. Vorrichtung nach vorangehendem Anspruch, **dadurch gekennzeichnet, dass** der Pol (H'), der das nicht freie Ende des beweglichen Arms (26) trägt, mit einem Teil (33) fest verbunden ist, das über einen gezahnten Sektor verfügt, der geeignet ist, mit einem Zahneingriff (32) zusammenzuwirken, der imstande ist, von einem Getriebemotor (31) derart rotierend angetrieben zu sein, dass die Steuermittel über ein Reduktionsmoment verfügen, das geeignet ist, eine manuelle Steuerung des Schwenkens des beweglichen Arms zu erlauben.

10. Vorrichtung nach vorangehendem Anspruch, **dadurch gekennzeichnet, dass** der Zahneingriff (32) Mittel aufweist, die geeignet sind, seine Betätigung mit Hilfe eines Schlüssels derart zu erlauben, dass die manuelle Steuerung des Schwenkens möglich ist.

11. Stromabnehmersystem für rollendes Eisenbahnmaterial mit Multispannungs-Zugstromkreis, **dadurch gekennzeichnet, dass** es eine Vorrichtung nach einem der vorangehenden Ansprüche umfasst.

## Claims

1. A device designed to be used in a current collection system for railway rolling stock with a multi-voltage traction circuit including a roof line (3) carrying the collected current from a catenary line (1, 2) comprising in an integrated manner on a mechanical support:
▪ commutation means capable of performing commutation depending on whether the vehicle roof line is carrying direct current or single-phase current, between:
- a first state in which it connects said roof line (3) to a continuous power line (4) provided for carrying direct current toward the traction circuit of said equipment,
- and a second state,
**characterized in that** in the second state said roof line (3) is isolated and said continuous power line (4) is connected to ground or to another continuous power line; and
▪ **in that** it comprises in an integrated manner on the same mechanical support:
- voltage sensor means (PP') for recognizing the voltage carried by the roof line, and/or
- electrical protection means (PFC') against lightning and maneuvering impacts.

2. The device according to the preceding claim, **characterized in that** it includes a support plate (S') and **in that** said commutation means include a pole (H') designed to be connected to the continuous power line, a pole (C') designed to be connected to the roof line, a pole (O') designed to be connected to ground or to any other continuous power line, said poles (H', C', 0') being carried by said support plate (S'), as well as a movable arm (26) one end whereof is carried by the pole (H') designed to be connected to the continuous power line and the other end whereof can, by pivoting said arm about the pole (H') designed to be connected to the continuous power line, come in contact with one or the other of the other poles (C', O') to connect the roof line to the continuous power line or connect the continuous power line to ground or to any other continuous power line.

3. The device according to Claim 2, **characterized in that** said poles (H', C', 0') each extends from a same face of said support plate (S').

4. The device according to one of Claims 2 or 3, **characterized in that** it comprises voltage sensor means (PP') and **in that** said voltage sensor means (PP') are arranged at said pole (C') designed to be connected to the roof line.

5. The device according to one of Claims 2 or 3, **characterized in that** it comprises said protection means (PFC') and **in that** said protection means (PFC') are arranged at said pole (H') designed to be connected to the continuous power line.

6. The device (20) according to one of Claims 2 or 3, **characterized in that** it comprises both voltage sensor means (PP') and protection means (PFC') and **in that** said voltage sensor means (PP') are arranged at the said pole (C') designed to be connected to the roof line and said protection means (PFC') are arranged at said pole (H') designed to be connected to the continuous power line.

7. The device according to one of Claims 4 or 6, **characterized in that** said pole (C') designed to be connected to the roof line is also designed to be installed as the foot or insulating support of a pantograph allowing collection, from the catenary line, of the current which is carried on the roof line.

8. The device according to one of Claims 2 to 7, **characterized in that** it comprises means for controlling the pivoting of the movable arm (26) in the form of electric or pneumatic motorization.

9. The device according to the preceding claim, **characterized in that** the pole (H') bearing the non-free end of the movable arm (26) is integrally connected to a part (33) provided with a toothed sector for cooperating with a gear train (32) capable of being driven in rotation by a gear motor (31), so that said control means are provided with a reduction ratio for allowing manual control of the pivoting of the movable arm.

10. The device according to the preceding claim, **characterized in that** said gear train (32) comprises means for allowing its operation by means of a wrench, so as to allow manual control of the pivoting.

11. A system for collecting current for railway rolling stock with a multi-voltage traction circuit, **characterized in that** it comprises a device according to one of the preceding claims.
